# EUROPÄISCHE PATENTSCHRIFT

(11) **EP 1 101 341 B1**
(45) Veröffentlichungstag und Bekanntmachung des Hinweises auf die Patenterteilung: **13.12.2006**
(21) Anmeldenummer: 99945913.4
(22) Anmeldetag: 05.07.1999
(51) Int. Cl.: H04M 1/247, G06F 3/023

(54) **VERFAHREN ZUM INBETRIEBSETZEN EINES TELEKOMMUNIKATION-ENDGERÄTS UND ENTSPRECHENDES TELEKOMMUNIKATION-ENDGERÄT**
METHOD FOR INSTALLING A TELECOMMUNICATION TERMINAL AND CORRESPONDING TELECOMMUNICATION TERMINAL
PROCEDE POUR LA MISE EN SERVICE D'UN TERMINAL DE TELECOMMUNICATION, ET TERMINAL DE TELECOMMUNICATION CORRESPONDANT

(30) Priorität: 31.07.1998 DE 19834722
(43) Veröffentlichungstag der Anmeldung: 23.05.2001
(73) Patentinhaber: SIEMENS AKTIENGESELLSCHAFT, 80333 München (DE)
(72) Erfinder: FLEISCHER, Karl, D-81477 München (DE); MATTERN, Stefan, D-81539 München (DE)
(86) Internationale Anmeldenummer: PCT/DE1999/002075
(87) Internationale Veröffentlichungsnummer: WO 2000/008827

(56) Entgegenhaltungen:
- EP-A- 0 496 492
- EP-A- 0 680 189
- WO-A-94/29786
- US-A- 5 633 484

## Beschreibung

Die vorliegende Erfindung betrifft ein Verfahren zum Inbetriebsetzen eines Telekommunikation-Endgeräts, wie z.B. eines herkömmlichen Telefons, eines Mobiltelefons oder eines schnurlosen Telefons, sowie ein entsprechendes Telekommunikation-Endgerät, welches sich insbesondere auch in Telefon-Nebenstellenanlagen einsetzen läßt.

Bekannterweise kann ein Benutzer an seinem Telefongerät bestimmte Betriebsparameter einstellen, die nachfolgend den Betrieb des Telefongeräts definieren. Die Einstellung der Betriebsparameter erfolgt dabei durch Eingabe entsprechender Codes, die über die Tastatur des Telefongeräts einzugeben sind. Die Einstellung der Codes wird des weiteren auf der Anzeige des Telefongeräts angezeigt, soweit eine entsprechende Anzeige vorhanden ist. Als Betriebsparameter können somit beispielsweise die Ruftonfrequenz, die Ruftonlautstärke oder die bei einem Betrieb an einer Telefon-Nebenstellenanlage für externe Gespräche vorzuwählende Amtskennzahl (AKZ) usw. eingestellt oder programmiert werden. Eine derartige Programmierung der Telefongeräte ist jedoch relativ aufwendig, da für jede Einstellung eines Betriebsparameters ein entsprechender Code eingegeben werden muß, den der Benutzer jedoch in der Regel im Handbuch des Telefongeräts nachschlagen muß, da er sich die Vielzahl der verschiedenen Einstellcodes nicht merken kann.

Um die Inbetriebnahme des Telefongeräts für den Endverbraucher zu erleichtern, sind die wichtigsten Betriebsparameter normalerweise durch den Hersteller mit Hilfe von voreingestellten Standardwerten (Defaultwerten) vorprogrammiert, wobei diese Voreinstellungen einen Großteil der Anwendungsfelder abdecken. Dennoch treten häufig Anwendungsfälle auf, die durch diese Voreinstellungen nicht abgedeckt sind, so daß der Benutzer wieder die zuvor beschriebene aufwendige Neuprogrammierung des Telefongeräts durchführen muß.

Aus der US 5,633,484 ist ein Verfahren sowie eine Einrichtung bekannt, die ein Managen sowie die Auswahl von persönlichen Attributen mittels eines Speichers sicherstellt, welcher Voreinstellungen (Präferenzen) enthält, wobei dieser Speicher zum Zwecke der Auswahl und des Managements in das jeweilige Nutzerendgerät eingeschoben wird.

Der vorliegenden Erfindung liegt daher die Aufgabe zugrunde, ein Verfahren zum Inbetriebsetzen eines Telekommunikation-Endgeräts sowie ein entsprechendes Telekommunikation-Endgerät vorzuschlagen, womit die Inbetriebnahme des Telekommunikation-Endgeräts für den Endverbraucher bzw. Benutzer erleichtert werden kann.

Diese Aufgabe wird gemäß der vorliegenden Erfindung durch ein Verfahren mit den Merkmalen des Anspruches 1 bzw. ein Telekommunikation-Endgerät mit den Merkmalen des Anspruches 5 gelöst. Die Unteransprüche beschreiben jeweils bevorzugte und vorteilhafte Ausführungsformen der vorliegenden Erfindung, die ihrerseits zu einer möglichst einfachen Inbetriebnahme des Telekommunikation-Endgeräts durch den Endverbraucher beitragen, indem die Einstellung der verschiedenen Betriebsparameter benutzerfreundlich erleichtert wird.

Gemäß der vorliegenden Erfindung ist eine automatische Eingabeführung vorgesehen, die dem Benutzer oder Endverbraucher über die wichtigsten Betriebsparameter Einstellungen führt und somit die Programmierung der Betriebsparameter durch den Benutzer unterstützt. Diese automatische Eingabeführung kann in dem Telekommunikation-Endgerät insbesondere in Form eines Software-Assistenten realisiert sein, der automatisch aktiviert wird, sobald das Telekommunikation-Endgerät an die Stromversorgung angeschlossen wird. Des weiteren kann vorgesehen sein, daß dieser Software-Assistent automatisch nach einem Stromausfall erneut aktiviert wird, um auf diese Weise eine Neueinstellung der Betriebsparameter durch eine Bedienperson zu ermöglichen.

Die gemäß der vorliegenden Erfindung vorgeschlagene automatische Eingabeführung bzw. der zuvor erwähnte Software-Assistent ist insbesondere derart realisiert, daß verschiedene Eingabe- oder Auswahlmasken automatisch gemäß einem vorgegebenen hierarchischen System auf der Anzeige des Telekommunikation-Endgeräts angezeigt werden, die den Benutzer zur Einstellung entsprechender Betriebsparameter auffordern. Die Einstellung des jeweiligen Betriebsparameters kann durch Auswahl einer vorgegebenen Option oder durch Eingabe eines entsprechenden Werts geschehen. Nach einer Eingabe oder Auswahl durch den Benutzer wechselt die automatische Eingabeführung gemäß dem zuvor beschriebenen hierarchischen System selbständig zu einer neuen Eingabe- oder Auswahlmaske, um die Einstellung eines neuen Betriebsparameters zu ermöglichen. Eine Eingabe der Bedienperson erfolgt dabei vorteilhafterweise über die Tastatur des Telekommunikation-Endgeräts. Liegen bei Aufruf der automatischen Eingabeführung bzw. des Software-Assistenten bereits frühere Einstellungen der entsprechenden Betriebsparameter vor, werden diese in den entsprechenden Eingabe- oder Auswahlmasken bzw. Displayanzeigen als vorgegebene Standard- oder Defaultwerte angezeigt, so daß die Bedienperson diese Werte gegebenenfalls einfach übernehmen kann.

Trifft während der zuvor beschriebenen automatischen Einstellprozedur, d.h. nach Aktivierung der automatischen Eingabeführung, ein Anruf bei dem entsprechenden Telekommunikation-Endgerät ein, wird der Bedienperson durch eine entsprechende Display-Anzeige an dem jeweiligen Telekommunikation-Endgerät, die Möglichkeit gegeben, den Anruf anzunehmen oder aber die Einstellprozedur fortzusetzen. Durch eine entsprechende Eingabe, in der Regel durch Betätigung einer entsprechenden Taste (Softkey), kann die Bedienperson den Anruf annehmen, wobei in diesem Fall die Einstellprozedur abgebrochen und der Software-Assistent bzw. die automatische Eingabeführung in einen Ruhezustand versetzt wird. Alternativ kann vorgesehen sein, stets eingehenden Anrufen den Vorrang einzuräumen, so daß bei Eingehen eines Anrufs automatisch die Einstellprozedur abgebrochen wird, um den eingehenden Anruf annehmen zu können. Vorteilhafterweise bleiben in diesem Fall die bereits getätigten Einstellungen gespeichert.

Die vorliegende Erfindung kann auf Telekommunikation-Endgeräte verschiedenen Typs angewendet werden. Insbesondere kann die Erfindung sowohl auf direkt an einen Telefonhauptanschluß angeschlossene Endgeräte als auch auf an Telefon-Nebenstellenanlagen angeschlossene Endgeräte angewendet werden. Des weiteren kommt ein Einsatz der vorliegenden Erfindung sowohl in analogen oder digitalen stationären Telefongeräten als auch in Mobiltelefonen, wie z.B. schnurlosen Telefonen, in Frage.

Die vorliegende Erfindung wird nachfolgend anhand bevorzugter Ausführungsbeispiele unter Bezugnahme auf die beigefügte Zeichnung näher erläutert.
Fig. 1a und 1b zeigen beispielhaft anhand verschiedener Display-Darstellungen den Ablauf der Einstellung von Betriebsparametern gemäß der vorliegenden Erfindung für ein analoges Telefon-Endgerät,
Fig. 2a - 2c zeigen beispielhaft anhand verschiedener Display-Darstellungen den Ablauf der Einstellung verschiedener Betriebsparameter gemäß der vorliegenden Erfindung für ein digitales Telefon-Endgerät, und
Fig. 3 zeigt ein vereinfachtes Blockschaltbild eines erfindungsgemäßen Telekommunikation-Endgeräts.

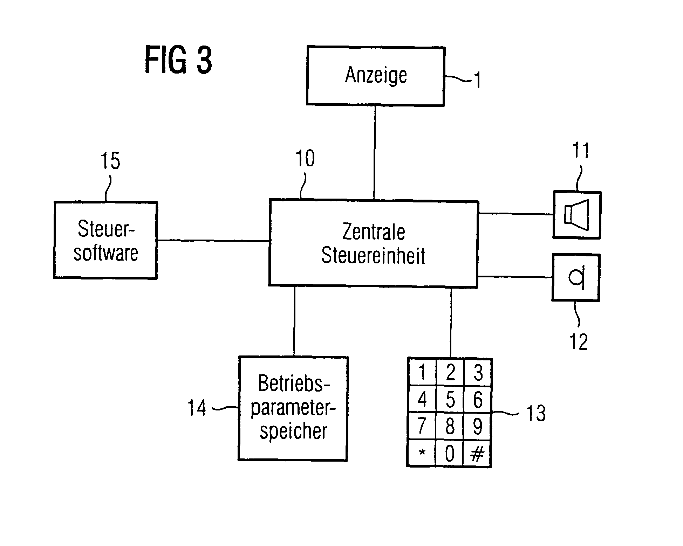

Zunächst soll anhand Fig. 3 der Aufbau eines erfindungsgemäßen Telekommunikation-Endgeräts am Beispiel eines stationären Endgeräts erläutert werden. Zentraler Bestandteil ist eine zentrale Steuereinheit 10, die die Funktion des Telekommunikation-Endgeräts, wie z.B. den Empfang bzw. das Senden von Kommunikationsinformationen über ein daran angeschlossenes (und nicht gezeigtes) Telefonnetz, steuert und zu diesem Zweck auch mit dem Lautsprecher 11 und dem Mikrofon 12 des Telefons gekoppelt ist. Insbesondere dient jedoch die zentrale Steuereinheit 10 auch zur Steuerung der Eingabe bzw. Einstellung von Betriebsparametern durch eine Bedienperson. Dies erfolgt mit Hilfe eines Eingabeassistenten, dessen Funktionsumfang, wie z.B. die Art der einzustellenden Betriebsparameter oder die Reihenfolge der Einstellung der einzelnen Betriebsparameter, durch die Software 15 der zentralen Steuereinheit 10 festgelegt ist. Nach Aktivierung dieses Eingabeassistenten werden auf der Anzeige bzw. dem Display 1 des Endgeräts abhängig von der Steuersoftware 15 verschiedene Eingabe- oder Auswahlmasken angezeigt, mit deren Hilfe die Bedienperson insbesondere über die Tastatur 13 des Endgeräts entsprechende Eingaben oder Einstellungen tätigen kann. Anstelle der Tastatur 13 ist, wie später noch erläutert wird, als Eingabemedium für die Einstellung/Eingabe von Betriebsparametern beispielsweise auch die Betätigung von sogenannten Softkeys möglich. Eingegebene oder eingestellte Werte für die einzelnen Betriebsparameter werden in einem entsprechenden Speicher 14, beispielsweise in einem EEPROM, abgelegt, um später einerseits bei Betrieb des Telekommunikation-Endgeräts darauf zugreifen oder andererseits neue Werte für die Betriebsparameter abspeichern zu können.

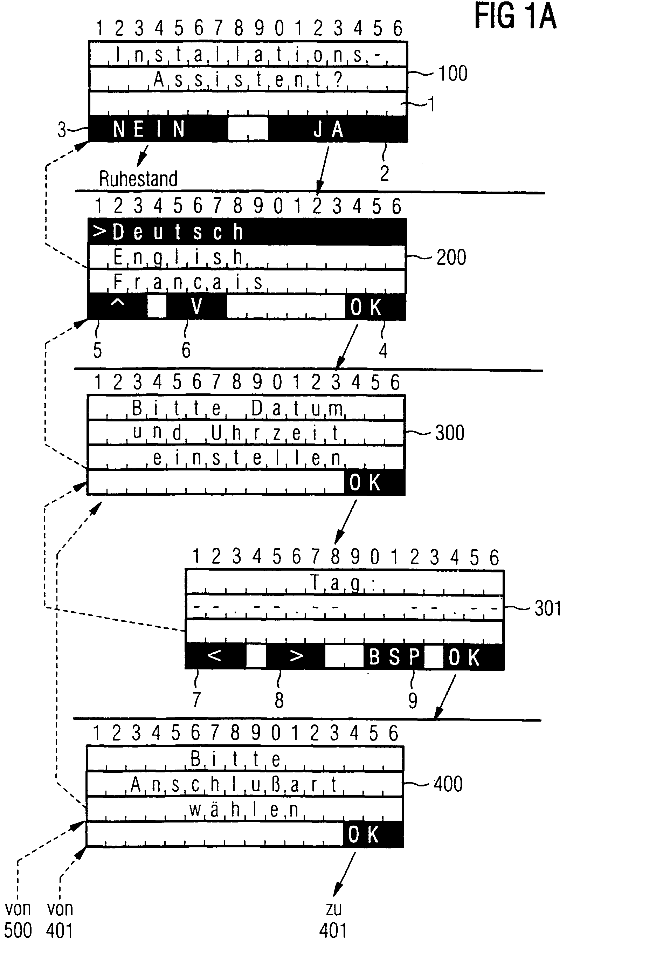

Fig. 1a zeigt den Inhalt 100 einer Display-Anzeige 1 des erfindungsgemäßen analogen Telefon-Endgeräts nach Aktivierung des Software- bzw. Eingabeassistenten.

Der Eingabeassistent wird automatisch aktiviert, wenn das Telefon-Endgerät an eine Stromversorgung angeschlossen oder nach einem Stromausfall wieder mit Strom versorgt wird. D.h. eine Aktivierung des Eingabeassistenten kann lediglich über einen Netzausfall oder durch Ziehen und erneutes Einstecken des Stromsteckers des Telefon-Endgeräts erreicht werden. Der Benutzer darf vorteilhafterweise während der Inbetriebnahme des Telefon-Endgeräts keine Telefonleitung stecken, sondern lediglich den Stromstecker, so daß verhindert werden kann, daß ankommende Anrufe keinen Vorrang vor erstmaligen Geräteeinstellungen haben. Erst nach Durchlaufen der Einstellprozedur kann beispielsweise der Benutzer in der Bedienungsanleitung darauf hingewiesen werden, daß die Telefonleitung gesteckt werden soll.

Mit der in Fig. 1a gezeigten Displayanzeige 100 fragt das Telefon-Endgerät bei dem Benutzer bzw. der Bedienperson zunächst nach, ob tatsächlich der Eingabeassistent zur Einstellung verschiedener Betriebsparameter des Telefon-Endgeräts gestartet werden soll. In Anzeigefeldern 2 bzw. 3 werden dem Benutzer die Eingabemöglichkeiten angezeigt, so daß durch Betätigung einer dem Feld 2 zugeordneten Taste ("JA"-Taste) des Telefon-Endgeräts die Einstellprozedur mit Unterstützung durch den Eingabeassistenten gestartet wird, während durch Betätigung einer dem Feld 3 zugeordneten Taste ("NEIN"-Taste) die Einstellprozedur abgebrochen und in einen Ruhezustand gewechselt wird.

Nach Betätigung der "JA"-Taste wird die in Fig. 1a dargestellte Auswahlmaske bzw. Auswahldarstellung 200 auf dem Display des Telefon-Endgeräts angezeigt. Mit Hilfe dieser Auswahldarstellung 200 kann der Benutzer die Sprache für die nachfolgende Installations- bzw. Einstellprozedur wählen. Mit Hilfe einer dem in Fig. 1a dargestellten Anzeigenfeld 5 zugeordneten Taste kann der in der Anzeige 200 schwarz dargestellte Balken nach oben verschoben werden, während dieser Balken mit Hilfe einer dem Anzeigenfeld 6 zugeordneten Taste nach unten verschoben werden kann. Die augenblicklich ausgewählte Sprache wird durch den schwarzen Balken hinterlegt dargestellt. Mit Hilfe einer dem Feld 4 zugeordneten Taste ("OK"-Taste) des Telefon-Endgeräts kann der Benutzer schließlich die Auswahl bestätigen.

Nach Betätigung der "OK"-Taste wird auf dem Display des Telefon-Endgeräts die in Fig. 1a dargestellte Mitteilung 300 ausgegeben, die den Benutzer auffordert, das augenblickliche Datum und die augenblickliche Uhrzeit einzustellen. Durch Betätigung der "OK"-Taste wird auf dem Display eine Eingabemaske 301 dargestellt, in die der Benutzer mit Hilfe der Zahlentasten des Telefon-Endgeräts das Datum und die Uhrzeit eingeben kann. Die Eingabe erfolgt hierbei mit Hilfe eines Cursors, der die augenblickliche Eingabeposition in der Eingabemaske 301 bezeichnet. Dieser Cursor kann mit Hilfe einer dem in Fig. 1a gezeigten Feld 7 entsprechenden Taste nach links und mit Hilfe einer dem Feld 8 entsprechenden Taste nach rechts verschoben werden. Dem ebenfalls in der Anzeige 301 dargestellten Feld 9 ist eine Backspace-Funktionstaste zugeordnet, bei deren Betätigung der Cursor um ein Feld nach links verschoben und zugleich das augenblickliche Eingabefeld gelöscht wird. Die Eingabe des Datums und der Uhrzeit kann durch den Benutzer wieder mit Hilfe der "OK"-Taste bestätigt werden.

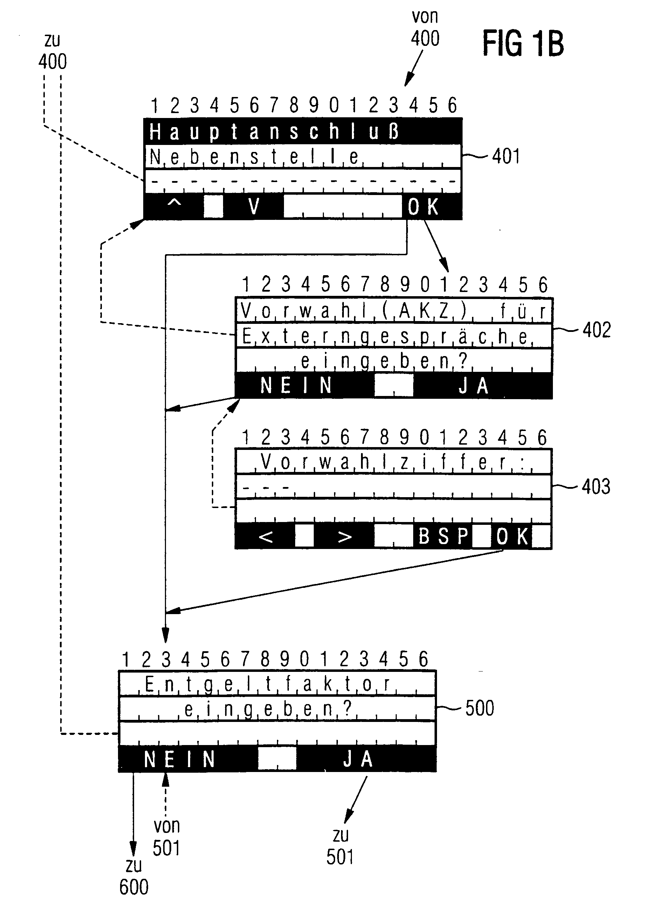

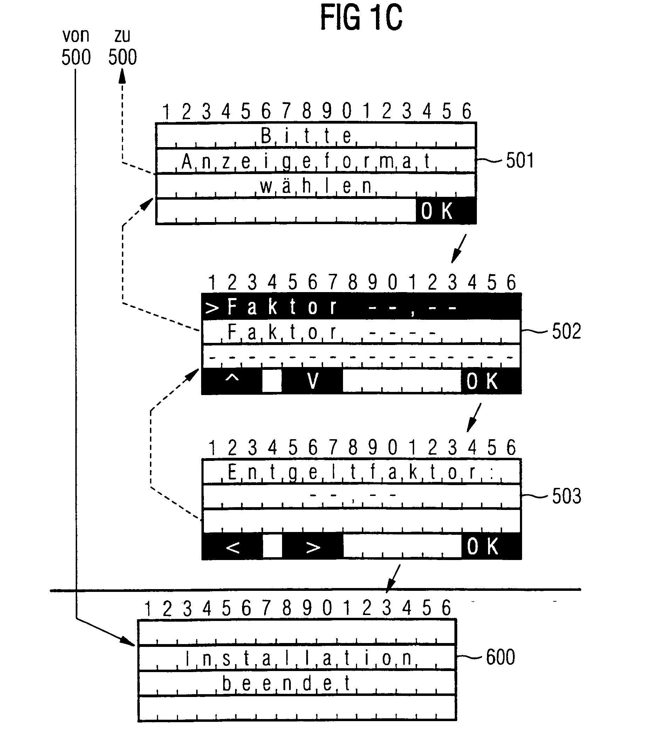

Anschließend wird durch den Software-Assistenten automatisch eine neue Mitteilung 400 auf dem Display des Telefon-Endgeräts angezeigt, mittels der der Benutzer über die nachfolgend zu tätigende Einstellung der Anschlußart des Telefon-Endgeräts informiert wird. Durch Betätigung der "OK"-Taste wird auf dem Display des Telefon-Endgeräts die in Fig. 1b dargestellte Auswahlmaske 401 angezeigt, wobei wiederum ein schwarzer Balken zur Auswahl zwischen den vorgegebenen Optionen nach oben oder nach unten verschoben werden kann. Hat der Benutzer als Anschlußart "Nebenstelle" ausgewählt und anschließend die "OK"-Taste des Telefon-Endgeräts betätigt, wird vorzugsweise das Leistungsmerkmal "automatischer Dämpfungsausgleich" (ADA) aktiviert und es erfolgt ein Wechsel zu einer neuen Mitteilung 402 auf dem Display des Telefon-Endgeräts, über die der Benutzer über die nachfolgend zu tätigende Eingabe der Amtskennzahl, d.h. der bei externen Gesprächen vorzuwählenden Ziffer, um auf die Amtsleitung zugreifen zu können, informiert wird. Dabei kann der Benutzer wählen, ob er diese Amtskennzahl (AKZ) eingeben will oder nicht. Hat er die dem "JA"-Feld entsprechende Taste des Telefon-Endgeräts betätigt, wird auf dem Display des Telefon-Endgeräts eine Eingabemaske 403 angezeigt, in die der Benutzer über die Zifferntasten des Telefon-Endgeräts eine dreistellige Amtskennzahl eingeben kann.

Hat der Benutzer bei Anzeige der Auswahlmaske 401 die Option "Hauptanschluß" gewählt (in diesem Fall ist das Merkmal "ADA" deaktiviert) oder bei Anzeige der Eingabemaske 403 die "OK"-Taste bzw. bei Anzeige des Auswahlfensters 402 die der Option "NEIN" entsprechende Taste betätigt, wird auf dem Display des Telefon-Endgeräts eine weitere Auswahloption 500 angezeigt, wobei abgefragt wird, ob die Eingabe eines Gebühren- oder Entgeltfaktors, der die Grundlage für die Gebührenberechnung für von dem entsprechenden Telefon-Endgerät aus geführte Gespräche darstellt, gewünscht ist. Nach Betätigung der der Option "JA" zugeordneten Taste wird eine Mitteilung 501 angezeigt, die dem Benutzer über die nachfolgend zu tätigende Eingabe des Anzeigeformats für den Entgeltfaktor informiert. Nach Betätigung der "OK"-Taste wird schließlich eine neue Auswahlmaske 502 angezeigt, bei der der Benutzer durch Verschieben des in der Anzeige 502 dargestellten schwarzen Balkens nach oben oder nach unten das Anzeigeformat für den Entgeltfaktor auswählen kann. Die Auswahl kann wiederum durch Betätigung der "OK"-Taste bestätigt werden, wobei nachfolgend eine Eingabemaske 503 auf dem Display des Telefon-Endgeräts angezeigt wird, in die der Benutzer mittels der Zahlentasten des Telefon-Endgeräts den gewünschten Entgeltfaktor für die Gebührenberechnung eingeben kann. Dabei erfolgt keine Währungseingabe. Wurde ein Entgeltfaktor eingegeben, wird automatisch in dem Telefon-Endgerät die Entgeltanzeige aktiviert.

Durch Betätigung der "OK"-Taste wird die Eingabemaske 503 wieder verlassen. Bei dem in Fig. 1a/1b dargestelltem Beispiel wird davon ausgegangen, daß nunmehr die Installation, d.h. die Einstellung der Betriebsparameter des Telefon-Endgeräts, beendet ist, und es wird eine entsprechende Mitteilung 600 auf dem Display des Telefon-Endgeräts angezeigt. Zur Bestätigung des Abschlusses des Installationsvorgangs kann optional auch eine bestimmte Tonfolge oder Melodie über den Lautsprecher des Telefon-Endgeräts ausgegeben oder auf dem Display eine bestimmte Animation dargestellt werden.

Selbstverständlich ist die vorliegende Erfindung nicht auf die in Fig. 1a und Fig. 1b dargestellten Einstellmöglichkeiten beschränkt, sondern es können auch zusätzliche oder andere Betriebsparameter des Telefon-Endgeräts, wie z.B. die Ruftonlautstärke, die Ruftonfolge usw. durch Unterstützung des automatischen Eingabe- oder Softwareassistenten eingestellt werden. Dies ist im wesentlichen lediglich von der Steuerung der Software des Telefon-Endgeräts abhängig.

Aus Fig. 1a und 1b ist ersichtlich, daß die automatische Eingabesteuerung gemäß einem vorprogrammierten und vorgegebenen hierarchischen System abläuft. Durch die Betätigung einer entsprechenden Taste des Telefon-Endgeräts (Softkey-Betätigung) wechselt die Display-Anzeige des Telefon-Endgeräts, und es wird eine neue Auswahl- oder Eingabemaske angezeigt bis die Installation beendet ist. Diese Übergänge sind in Fig. 1a und Fig. 1b mit Hilfe durchgezogener Pfeile dargestellt. Daneben besteht jedoch auch die Möglichkeit, von einer Displayanzeige auch zu einer vorhergehenden bzw. hierarchisch übergeordneten Displayanzeige zurückzukehren, um beispielsweise falsche Eingaben korrigieren zu können. Diese Rücksprünge sind in Fig. 1a und 1b durch gestrichelte Pfeile dargestellt und werden durch Betätigung einer ESC-Taste (ESC-Hardkey) des Telefon-Endgeräts herbeigeführt. Auf diese Weise kann beispielsweise von der Displayanzeige 500 zu der Displayanzeige 400 zurückgesprungen werden.

Es wurde bereits erläutert, daß die automatische Einstellprozedur, d.h. der automatische Software- oder Eingabeassistent, stets aktiviert wird, wenn das Telefon-Endgerät an eine Stromversorgung angeschlossen bzw. nach einem Stromausfall erneut mit Strom versorgt wird. Entsprechend wird die Einstellprozedur und damit der Eingabeassistent automatisch verlassen, falls für eine längere Zeit, z.B. 2 Minuten, keine Eingabe getätigt worden ist. Bereits getätigte Einstellungen bleiben dann gespeichert und somit erhalten. Darüber hinaus besteht auch die Möglichkeit, die Eingabeprozedur durch Abheben des Hörers und Wiederauflegen des Hörers bzw. entsprechend durch Ein- und wieder Ausschalten des Lautsprechers des Telefon-Endgeräts zu verlassen, was einem Not-Reset entspricht.

In der Regel wird ein Telefon-Endgerät bereits mit vorgegebenen Standard- oder Defaulteinstellungen der einzelnen Betriebsparameter ausgeliefert. Diese Liefereinstellungen werden vorzugsweise von dem Eingabeassistent bei Darstellung einer entsprechenden Display-Anzeige übernommen und dem Benutzer zur Bestätigung angeboten, so daß gegebenenfalls bei Einverständnis mit den vorgegebenen Liefereinstellungen keine Neueingabe durch den Benutzer erforderlich ist. Dasselbe gilt für Betriebsparameter, die bereits früher durch einen Benutzer eingestellt worden sind. Ist der Benutzer nicht mit diesen älteren Einstellungen der Betriebsparameter einverstanden, kann er durch eine entsprechende Eingabe über die Tastatur des Telefon-Endgeräts wie oben beschrieben eine Neueingabe oder Neuauswahl vornehmen.

Während der Aktivierung des Eingabeassistenten, d.h. während Durchlaufen der in Fig. 1a und 1b dargestellten Einstellprozedur, kann der Fall auftreten, daß an dem entsprechenden Telefon-Endgerät ein Anruf eintrifft. In diesem Fall wird automatisch eine entsprechende Display-Anzeige auf dem Display des Telefon-Endgeräts dargestellt, die dem Benutzer über das Anliegen eines Anrufs informiert und die Möglichkeit zur Annahme des Anrufs bzw. zum Fortsetzen der Einstellprozedur anzeigt (z.B. durch Softkeys "Annahme" und "Weiter"). Entscheidet sich der Benutzer für die Annahme des Anrufs, d.h. betätigt er die entsprechende Annahmetaste, wird die Einstellprozedur und der automatische Eingabeassistent abgebrochen, und der Benutzer kann den Anruf entgegennehmen. Hat sich hingegen der Benutzer für die Fortführung der Einstellprozedur entschlossen, wird die Displayanzeige, die dem Benutzer über den anliegenden Anruf informiert hat, gelöscht und zu der vorhergehenden Displayanzeige zurückgekehrt.

Alternativ kann vorgesehen sein, stets eingehenden Anrufen den Vorrang einzuräumen, so daß bei Eingehen eines Anrufs automatisch die Einstellprozedur abgebrochen wird, um den eingehenden Anruf annehmen zu können. Vorteilhafterweise bleiben in diesem Fall die bereits getätigten Einstellungen gespeichert.

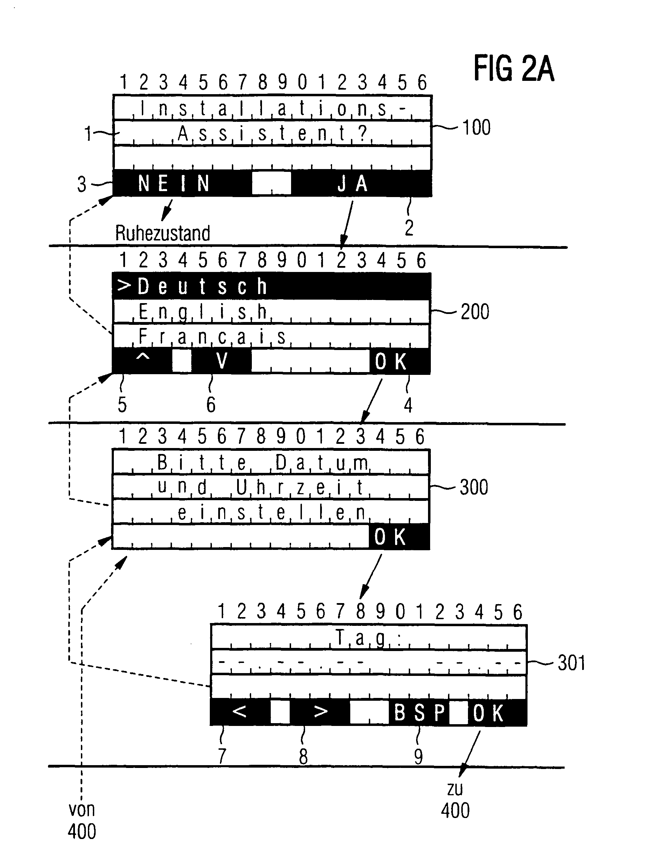

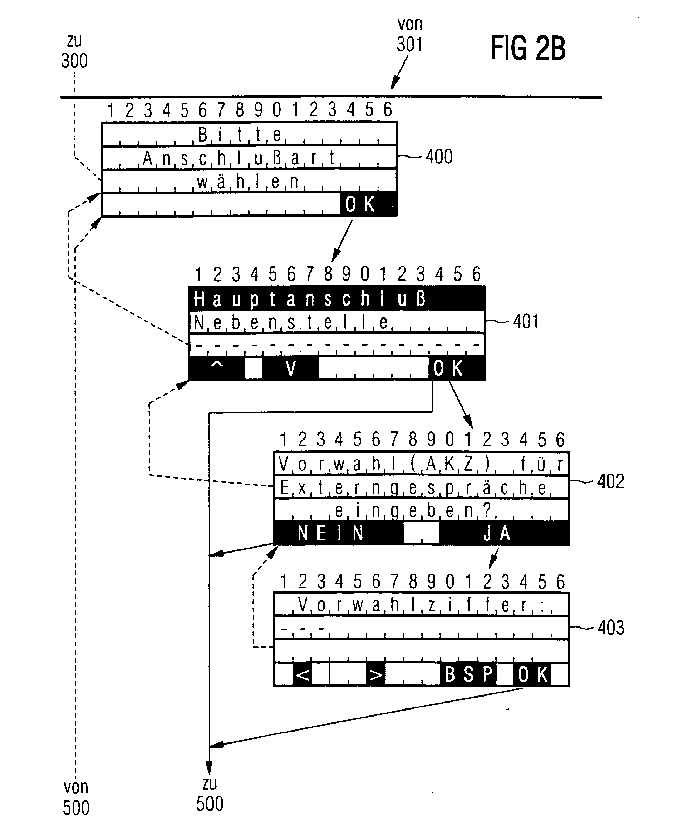

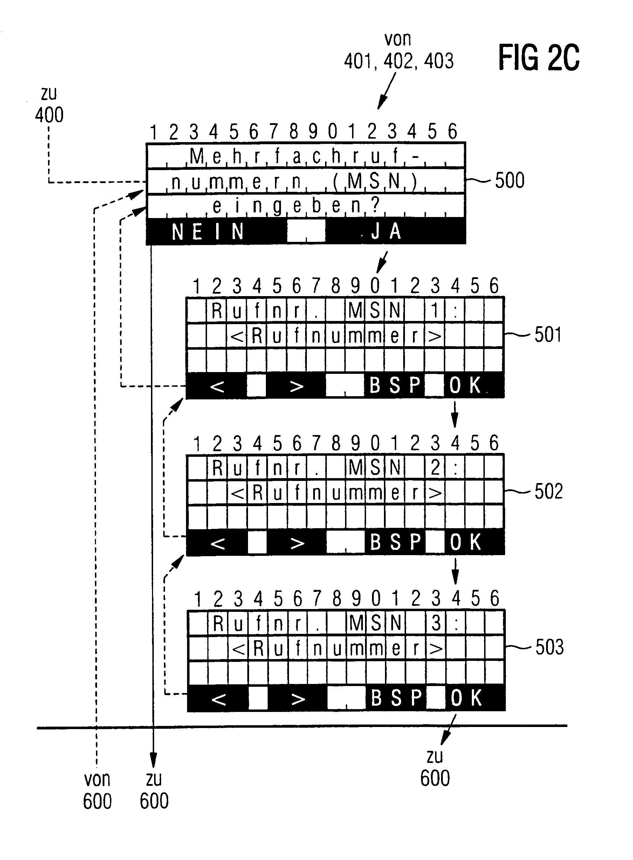

Fig. 2a - 2c zeigt ein der in Fig. 1a/1b dargestellten Einstellprozedur entsprechende Einstellprozedur für ein ISDN-Telefon-Endgerät.

Die in Fig. 2a - 2b dargestellten Displayanzeigen 100 - 403 entsprechen den in Fig. 1a - 1b gezeigten Displayanzeigen 100 - 403, so daß auf die obigen Erläuterungen verwiesen wird.

Im Gegensatz zu analogen Telefon-Endgeräten besteht jedoch bei ISDN-Telefon-Endgeräten die Möglichkeit, einem ISDN-Anschluß mehrere Rufnummern zuzuordnen. Daher wird nach den Display-Anzeigen 401 - 403 eine neue Auswahlmaske 500 dargestellt, über die beim Benutzer nachgefragt wird, ob die Eingabe derartiger Mehrfachrufnummern gewünscht ist. Bei Betätigung der "JA"-Taste kann der Benutzer anschließend in entsprechenden Eingabemasken 501- 503 mittels der Zahlentasten des Telefon-Endgeräts insgesamt drei derartige Mehrfachrufnummern eingeben. Nach Betätigung der "OK"-Taste bei Darstellung der Eingabemaske 503 bzw. nach Wahl der "NEIN"-Option bei Darstellung der Auswahlmaske 500 erfolgt die bereits anhand Fig. 1b - 1c beschriebene Einstellprozedur für den Entgeltfaktor, so daß auf die obigen Erläuterungen zu den Displayanzeigen 500 - 503 von Fig. 1b - 1c verwiesen wird.

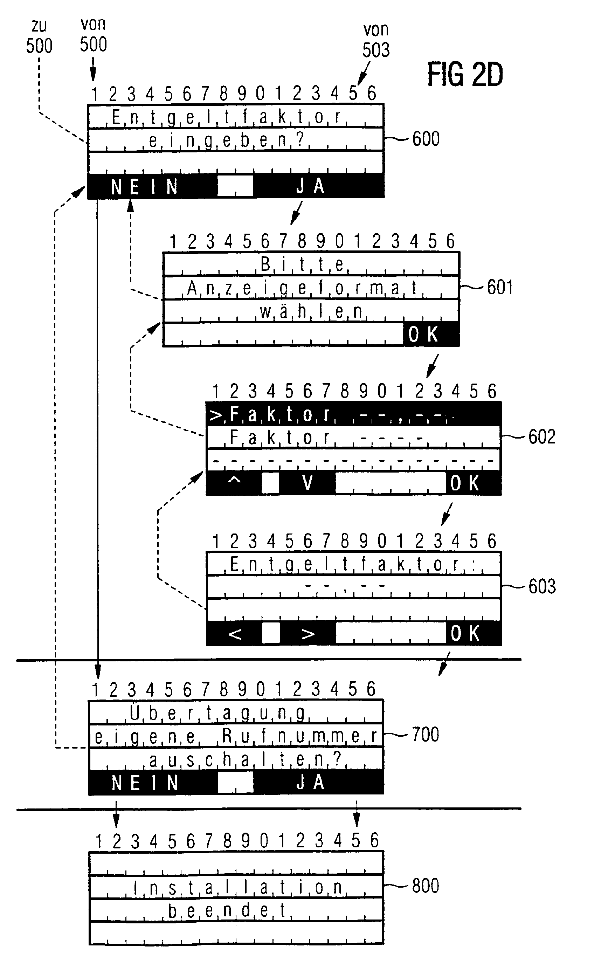

Hat der Benutzer bei Darstellung der Displayanzeige 600 die "NEIN"-Option gewählt bzw. in die Eingabemaske 603 den gewünschten Entgeltfaktor eingegeben und anschließend die "OK"-Taste betätigt, wird eine weitere Auswahlmaske 700 (vgl. Fig. 2d) auf dem Display des Telefon-Endgeräts angezeigt, mit deren Hilfe der Benutzer das sogenannte CLIR-Leistungsmerkmal (Calling Line Identification Restriction) des ISDN-Telefon-Endgeräts aktivieren oder deaktivieren kann, um auf diese Weise bei Aktivierung des CLIR-Leistungsmerkmals die Übertragung der eigenen Rufnummer zu dem Gesprächspartner zu unterdrücken. Bei Betätigung der "JA"-Taste wird demzufolge das CLIR-Leistungsmerkmal aktiviert, während bei Betätigung der "NEIN"-Taste unmittelbar die Einstellprozedur beendet und die in Fig. 2d gezeigte Abschlußmitteilung auf dem Display des Telefon-Endgeräts angezeigt wird. Für die Display-Anzeige 800 gelten wiederum die obigen Bemerkungen der in Fig. 1c dargestellten Displayanzeige 600. Selbstverständlich ist auch die in Fig. 2a - 2d gezeigte Einstellprozedur keinesfalls abschließend, sondern ausschließlich beispielhaft zu verstehen, und es können auch zusätzliche oder alternative Betriebsparameter, wie z.B. die Aktivierung einer Anrufliste oder die Aktivierung einer Rufumleitung usw., eingestellt werden.

## Patentansprüche

1. Verfahren zum Inbetriebsetzen eines Telekommunikation-Endgeräts,
wobei durch eine Bedienperson über Eingabemittel (2 - 9, 13) an dem Telekommunikation-Endgerät Betriebsparameter für einen nachfolgenden Betrieb des Telekommunikation-Endgeräts eingestellt werden können,
**dadurch gekennzeichnet,**
**daß** die Einstellung der Betriebsparameter durch einen automatischen Eingabeassistenten unterstützt erfolgt, der die Bedienperson automatisch durch die Einstellung der Betriebsparameter führt, und daß die Bedienperson durch den automatischen Eingabeassistenten mit Hilfe von Eingabe- oder Auswahlmasken, die auf einer Anzeige (1) des Telekommunikation-Endgeräts dargestellt werden, zur Einstellung der Betriebsparameter aufgefordert wird.

2. Verfahren nach Anspruch 1,
**dadurch gekennzeichnet,**
**daß** bereits zuvor eingestellte Werte für die einzustellenden Betriebsparameter als Standardwerte der Bedienperson vorgegeben werden, welche durch eine entsprechende Betätigung der Eingabemittel (2 - 9, 13) die Standardwerte übernehmen oder aber löschen und die Betriebsparameter neu einstellen kann.

3. Verfahren nach Anspruch 1,
**dadurch gekennzeichnet,**
**daß** die Eingabe- oder Auswahlmasken des automatischen Eingabeassistenten gemäß einem vorgegebenen hierarchischen System auf der Anzeige (1) des Telekommunikation-Endgeräts dargestellt werden, so daß abhängig von der Eingabe oder Auswahl der Bedienperson bei Darstellung einer Eingabe- oder Auswahlmaske eine bestimmte andere Eingabe- oder Auswahlmaske gemäß dem hierarchischen System auf der Anzeige (1) dargestellt wird.

4. Verfahren nach Anspruch 3,
**dadurch gekennzeichnet,**
**daß** die Bedienperson durch eine entsprechende Eingabe eine bereits zuvor angezeigte Eingabe- oder Auswahlmaske erneut aufrufen kann.

5. Telekommunikation-Endgerät,
mit Eingabemitteln (2 - 9, 13) zum Einstellen von Betriebsparametern des Telekommunikation-Endgeräts durch eine Bedienperson,
**dadurch gekennzeichnet,**
**daß** Steuermittel (10, 15) zum Unterstützen der Bedienperson bei der Einstellung der Betriebsparameter mit Hilfe eines automatischen Eingabeassistenten, um die Bedienperson automatisch durch die Einstellung der Betriebsparameter zu führen, vorgesehen sind und daß das Telekommunikation-Endgerät eine Anzeige (1) für eine durch die Steuermittel (10, 15) gesteuerte Darstellung von Eingabe- oder Auswahlmasken aufweist, wobei die Bedienperson durch die Eingabe- oder Auswahlmasken zur Einstellung entsprechender Betriebsparameter aufgefordert wird.

6. Telekommunikation-Endgerät nach Anspruch 5,
**dadurch gekennzeichnet,**
**daß** die Steuermittel (10, 15) derart ausgestaltet sind, daß sie die Eingabe- oder Auswahlmasken gemäß einem vorgegebenen hierarchischen System auf der Anzeige (1) darstellen, so daß bei Darstellung einer bestimmten Eingabe- oder Auswahlmaske abhängig von einer Eingabe oder Auswahl der Bedienperson über die Eingabemittel (2 - 9) eine durch das hierarchische System vorgegebene neue Eingabe- oder Auswahlmaske auf der Anzeige (1) dargestellt wird.

7. Telekommunikation-Endgerät nach Anspruch 5 oder 6,
**dadurch gekennzeichnet,**
**daß** die Steuermittel (10, 15) derart ausgestaltet sind, daß durch eine entsprechende Eingabe der Bedienperson über die Eingabemittel (2 - 9) durch die Steuermittel (10, 15) eine bereits zuvor dargestellte Eingabe- oder Auswahlmaske auf der Anzeige (1) erneut dargestellt wird.

8. Telekommunikation-Endgerät nach einem der Ansprüche 5-7,
**dadurch gekennzeichnet,**
**daß** die Steuermittel (10, 15) derart ausgestaltet sind, daß sie ein Anliegen eines Anrufs für das Telekommunikation-Endgerät erkennen und in diesem Fall auf der Anzeige (1) eine Eingabe- oder Auswahlmaske darstellen, mit deren Hilfe die Bedienperson über die Eingabemittel (2 - 9) die Fortführung der Einstellung der Betriebsparameter oder aber die Übernahme des Anrufs wählen kann,
wobei die Steuermittel (10, 15) bei einer der Anrufübernahme entsprechenden Eingabe der Bedienperson den Abbruch der Einstellprozedur und des Eingabeassistenten herbeiführen.

9. Telekommunikation-Endgerät nach einem der Ansprüche 5-7,
**dadurch gekennzeichnet,**
**daß** die Steuermittel (10, 15) derart ausgestaltet sind, daß sie ein Anliegen eines Anrufs für das Telekommunikation-Endgerät erkennen und in diesem Fall automatisch den Abbruch der Einstellprozedur und des Eingabeassistenten herbeiführen, um die Übernahme des Anrufs zu ermöglichen, wobei durch die Bedienperson bereits getätigte Einstellungen von Betriebsparametern gespeichert bleiben.

10. Telekommunikation-Endgerät nach einem der Ansprüche 5-9,
**dadurch gekennzeichnet,**
**daß** die Steuermittel (10, 15) derart ausgestaltet sind, daß sie bei Darstellung einer Eingabe- oder Auswahlmaske auf der Anzeige (1) des Telekommunikation-Endgeräts bereits zuvor eingestellte Werte für die entsprechenden Betriebsparameter darstellen und der Bedienperson zur Übernahme anbieten.

11. Telekommunikation-Endgerät nach einem der Ansprüche 5-10,
**dadurch gekennzeichnet,**
**daß** die Eingabemittel (2 - 9, 13) eine Tastatur (13) des Telekommunikation-Endgeräts umfassen.

12. Telekommunikation-Endgerät nach einem der Ansprüche 5-11,
**dadurch gekennzeichnet,**
**daß** die Steuermittel (10, 15) derart ausgestaltet sind, daß sie nach einem stromlosen Zustand des Telekommunikation-Endgeräts den Anschluß bzw. erneuten Anschluß des Telekommunikation-Endgeräts an eine Stromversorgung erkennen und in diesem Fall den automatischen Eingabeassistenten zur Einstellung der Betriebsparameter starten.

13. Telekommunikation-Endgerät nach Anspruch 12,
**dadurch gekennzeichnet,**
**daß** die Steuermittel (10, 15) derart ausgestaltet sind, daß sie beim Starten des automatischen Eingabeassistenten auf der Anzeige (1) des Telekommunikation-Endgeräts eine Eingabe- oder Auswahlmaske darstellen, mit deren Hilfe die Bedienperson die Fortführung der Einstellung der Betriebsparameter bestätigen oder aber die Einstellung der Betriebsparameter abbrechen kann.

14. Telekommunikation-Endgerät nach einem der Ansprüche 5-13,
**dadurch gekennzeichnet,**
**daß** die Steuermittel (10, 15) derart ausgestaltet sind, daß mit Hilfe des automatischen Eingabeassistenten als Betriebsparameter die Sprache des Eingabeassistenten, das aktuelle Datum und die aktuelle Uhrzeit, die Art des Anschlusses des Telekommunikation-Endgeräts an ein Telekommunikationsnetz, die Amtskennzahl und/oder ein Faktor für die Gebührenberechnung einstellbar ist.

15. Telekommunikation-Endgerät nach Anspruch 14,
**dadurch gekennzeichnet,**
**daß** das Telekommunikation-Endgerät ein digitales Endgerät ist, wobei die Steuermittel (10, 15) derart ausgestaltet sind, daß mit Hilfe des automatischen Eingabeassistenten Mehrfachrufnummern des Telekommunikation-Endgeräts und/oder die Unterdrückung der Übertragung der eigenen Rufnummer des Telekommunikation-Endgeräts zu einem Gesprächspartner einstellbar ist.

## Claims

1. Method for putting a telecommunication terminal into operation,
wherein operating parameters for subsequent operation of the telecommunication terminal can be set by an operator by way of input means (2 - 9, 13),
**characterised in that**
the operating parameters are set with the aid of an automatic input assistant, which guides the operator automatically through the setting of the operating parameters and the operator can be asked to set the operating parameters by the automatic input assistant with the aid of input or selection masks, which are displayed on a display unit (1) of the telecommunication terminal.

2. Method according to claim 1,
**characterised in that**
values already set for the operating parameters to be set are presented to the operator as standard values, said operator being able to adopt the standard values or delete them and set new operating parameters by corresponding operation of the input means (1 - 9, 13).

3. Method according to claim 1,
**characterised in that**
the input or selection masks of the automatic input assistant are displayed according to a predetermined hierarchical system on the display unit (1) of the telecommunication terminal, such that, depending on the operator input or selection when an input or selection mask is displayed, a specified other input or selection mask is displayed on the display unit (1) according to the hierarchical system.

4. Method according to claim 3,
**characterised in that**
the operator can recall an input or selection mask that has already been displayed by means of a corresponding input.

5. Telecommunication terminal,
with input means (2 - 9, 13) for an operator to set operating parameters of the telecommunication terminal,
**characterised in that**
control means (10, 15) are provided to assist the operator when setting the operating parameters with the aid of an automatic input assistant, to guide the operator automatically through the setting of the operating parameters and the telecommunication terminal has a display unit (1) for the display, controlled by the control means (10, 15), of input or selection masks, the operator being asked by the input or selection masks to set corresponding operating parameters.

6. Telecommunication terminal according to claim 5,
**characterised in that**
the control means (10, 15) are configured such that they display the input or selection masks according to a predetermined hierarchical system on the display unit (1) such that, when a specified input or selection mask is displayed, a new input or selection mask predetermined by the hierarchical system is displayed on the display unit (1) as a function of an input or selection by the operator by way of the input means (2 - 9).

7. Telecommunication terminal according to claim 5 or 6,
**characterised in that**
the control means (10, 15) are configured such that an already previously displayed input or selection mask is displayed again on the display unit (1) by the control means (10, 15) further to a corresponding input by the operator by way of the input means (2 - 9).

8. Telecommunication terminal according to one of claims 5-7,
**characterised in that**
the control means (10, 15) are configured such that they identify the arrival of a call for the telecommunication terminal and in this instance display an input or selection mask on the display unit (1), with the aid of which the operator can select by way of the input means (2 - 9) to continue to set the operating parameters or to accept the call,
the control means (10, 15) bringing about the termination of the setting procedure and the input assistant, if the operator input corresponds to call acceptance.

9. Telecommunication terminal according to one of claims 5-7,
**characterised in that**
the control means (10, 15) are configured such that they identify the arrival of a call for the telecommunication terminal and in this instance automatically terminate the setting procedure and the input assistant to allow the call to be taken, with settings of operating parameters already activated by the operator remaining stored.

10. Telecommunication terminal according to one of claims 5-9,
**characterised in that**
the control means (10, 15) are configured such that they display previously set values for the corresponding operating parameters and give the user the option of adopting them by displaying an input or selection mask on the display unit (1) of the telecommunication terminal.

11. Telecommunication terminal according to one of claims 5-10,
**characterised in that**
the input means (2 - 9, 13) comprise a keypad (13) of the telecommunication terminal.

12. Telecommunication terminal according to one of claims 5-11,
**characterised in that**
the control means (10, 15) are configured such that, after the telecommunication terminal has been without power, they identify the connection or re-connection of the telecommunication terminal to a power supply and in such an instance start the automatic input assistant to set the operating parameters.

13. Telecommunication terminal according to claim 12,
**characterised in that**
the control means (10, 15) are configured such that, when the automatic input assistant starts up, they display an input or selection mask on the display unit (1) of the telecommunication terminal, with the aid of which the operator can confirm continuation of setting of the operating parameters or terminate setting of the operating parameters.

14. Telecommunication terminal according to one of claims 5-13,
**characterised in that**
the control means (10, 15) are configured such that the language of the input assistant, the current date and time, the type of connection from the telecommunication terminal to a telecommunication network, the access code and/or a factor for charge calculation can be set as operating parameters with the aid of the automatic input assistant.

15. Telecommunication terminal according to claim 14,
**characterised in that**
the telecommunication terminal is a digital terminal, with the control means (10, 15) being configured such that multiple subscriber numbers of the telecommunication terminal and/or suppression of the transmission of the telecommunication terminal's own subscriber number to a call partner can be set with the aid of the automatic input assistant.

## Revendications

1. Procédé pour la mise en service d'un terminal de télécommunication,
des paramètres de service pour un service successif du terminal de télécommunication pouvant être réglés sur le terminal de télécommunication par une personne de service par l'intermédiaire de moyens d'entrée (2 - 9, 13)
**caractérisé en ce**
**que** le réglage des paramètres de service est réalisé en étant supporté par un assistant d'entrée automatique qui guide la personne de service automatiquement dans le réglage des paramètres de service et en ce que la personne de service est invitée à régler les paramètres de service au moyen de l'assistant d'entrée automatique à l'aide de masques d'entrée ou de sélection qui sont représentés sur un affichage (1) du terminal de télécommunication.

2. Procédé selon la revendication 1,
**caractérisé en ce**
**que** des valeurs déjà réglées auparavant pour les paramètres de service à régler sont indiquées à la personne de service comme valeurs par défaut, laquelle peut, au moyen d'une commande correspondante des moyens d'entrée (2 - 9, 13), reprendre les valeurs par défaut ou les supprimer et régler de nouveau les paramètres de service.

3. Procédé selon la revendication 1,
**caractérisé en ce**
**que** les masques d'entrée ou de sélection de l'assistant d'entrée automatique sont représentés sur l'affichage (1) du terminal de télécommunication selon un système hiérarchique prédéfini, de telle manière qu'en fonction de l'entrée ou de la sélection, lors de la représentation d'un masque d'entrée ou de sélection, un autre masque d'entrée ou de sélection déterminé est représenté à la personne de service sur l'affichage (1) selon le système hiérarchique.

4. Procédé selon la revendication 3,
**caractérisé en ce**
**que** la personne de service, au moyen d'une entrée correspondante, peut de nouveau appeler un masque d'entrée ou de sélection déjà affiché auparavant.

5. Terminal de télécommunication
comprenant des moyens d'entrée (2 - 9, 13) pour régler des paramètres de service du terminal de télécommunication par une personne de service,
**caractérisé en ce**
**que** des moyens de commande (10, 15) sont prévus pour supporter la personne de service lors du réglage des paramètres de service à l'aide d'un assistant d'entrée automatique, afin de guider automatiquement la personne de service dans le réglage des paramètres de service, et en ce que le terminal de télécommunication présente un affichage (1) pour une représentation de masques d'entrée ou de sélection, commandée par les moyens de commande (10, 15), la personne de service étant invitée à régler des paramètres de service correspondants au moyen des masques d'entrée ou de sélection.

6. Terminal de télécommunication selon la revendication 5,
**caractérisé en ce**
**que** les moyens de commande (10, 15) sont exécutés de telle manière qu'ils représentent les masques d'entrée ou de sélection sur l'affichage (1) selon un système hiérarchique prédéfini, de telle manière que lors de la représentation d'un masque d'entrée ou de sélection déterminé, un nouveau masque d'entrée ou de sélection, prédéfini par le système hiérarchique, est représenté sur l'affichage (1) en fonction d'une entrée ou d'une sélection de la personne de service par l'intermédiaire des moyens d'entrée (2 - 9).

7. Terminal de télécommunication selon la revendication 5 ou 6,
**caractérisé en ce**
**que** les moyens de commande (10, 15) sont exécutés de telle manière qu'en raison d'une entrée correspondante de la personne de service par l'intermédiaire des moyens d'entrée (2 - 9), un masque d'entrée ou de sélection déjà représenté auparavant est de nouveau représenté sur l'affichage (1) à l'aide des moyens de commande (10, 15).

8. Terminal de télécommunication selon l'une quelconque des revendications 5 à 7,
**caractérisé en ce**
**que** les moyens de commande (10, 15) sont exécutés de telle manière qu'ils reconnaissent une présence d'un appel pour le terminal de télécommunication et que, dans ce cas, ils représentent un masque d'entrée ou de sélection sur l'affichage (1), à l'aide duquel la personne de service peut sélectionner la poursuite du réglage des paramètres de service ou l'acceptation de l'appel par l'intermédiaire des moyens d'entrée (2 - 9),
les moyens de commande (10, 15), lors d'une entrée de la personne de service, correspondant à l'acceptation de l'appel, entraînant l'arrêt prématuré de la procédure de réglage et de l'assistant d'entrée.

9. Terminal de télécommunication selon l'une quelconque des revendications 5 à 7,
**caractérisé en ce**
**que** les moyens de commande (10, 15) sont exécutés de telle manière qu'ils reconnaissent une présence d'un appel pour le terminal de télécommunication et que, dans ce cas, ils entraînent automatiquement l'arrêt prématuré de la procédure de réglage et de l'assistant d'entrée afin de permettre l'acceptation de l'appel, les réglages de paramètres de service, déjà effectués par la personne de service, restant mémorisés.

10. Terminal de télécommunication selon l'une quelconque des revendications 5 à 9,
**caractérisé en ce**
**que** les moyens de commande (10, 15) sont exécutés de telle manière qu'en cas de représentation d'un masque d'entrée ou de sélection sur l'affichage (1) du terminal de télécommunication, ils représentent des valeurs déjà réglées auparavant pour les paramètres de service correspondants et les proposent à la personne de service pour leur reprise.

11. Terminal de télécommunication selon l'une quelconque des revendications 5 à 10,
**caractérisé en ce**
**que** les moyens d'entrée (2 - 9, 13) comprennent un clavier (13) du terminal de télécommunication.

12. Terminal de télécommunication selon l'une quelconque des revendications 5 à 11,
**caractérisé en ce**
**que** les moyens de commande (10, 15) sont exécutés de telle manière qu'après un état sans courant du terminal de télécommunication, ils reconnaissent la connexion resp. la nouvelle connexion du terminal de télécommunication à une alimentation en courant et que dans ce cas, ils démarrent l'assistant d'entrée automatique pour le réglage des paramètres de service.

13. Terminal de télécommunication selon la revendication 12,
**caractérisé en ce**
**que** les moyens de commande (10, 15) sont exécutés de telle manière qu'au démarrage de l'assistant d'entrée automatique, ils représentent un masque d'entrée ou de sélection sur l'affichage (1) du terminal de télécommunication, à l'aide duquel la personne de service peut confirmer la poursuite du réglage des paramètres de service ou arrêter prématurément le réglage des paramètres de service.

14. Terminal de télécommunication selon l'une quelconque des revendications 5 à 13,
**caractérisé en ce**
**que** les moyens de commande (10, 15) sont exécutés de telle manière que la langue de l'assistant d'entrée, la date actuelle et l'heure actuelle, le mode de connexion du terminal de télécommunication à un réseau de télécommunication, l'indicatif du central et/ou un facteur de facturation des taxes sont réglables en tant que paramètres de service à l'aide de l'assistant d'entrée automatique.

15. Terminal de télécommunication selon la revendication 14,
**caractérisé en ce**
**que** le terminal de télécommunication est un terminal numérique, les moyens de commande (10, 15) étant exécutés de telle manière que des numéros d'abonné multiples du terminal de télécommunication et/ou la suppression de la transmission du propre numéro d'appel du terminal de télécommunication vers un partenaire de communication sont réglables à l'aide de l'assistant d'entrée automatique.
